# EUROPÄISCHE PATENTANMELDUNG

(11) **EP 2 808 696 A2**
(43) Veröffentlichungstag der Anmeldung: **03.12.2014**
(21) Anmeldenummer: 14160423.1
(22) Anmeldetag: 18.03.2014
(51) Int. Cl.: G01S 13/42, G01S 13/93

(54) **Radarsensor und Verfahren zum Betreiben eines Radarsensors**

(30) Priorität: 13.05.2013 DE 102013208719
(71) Anmelder: Robert Bosch GmbH, 70442 Stuttgart (DE)
(72) Erfinder: Binzer, Thomas, 74379 Ingersheim (DE); Gross, Volker, 71254 Ditzingen (DE); Treptow, Andre, 71665 Vaihingen An Der Enz (DE); Schoor, Michael, 70195 Stuttgart (DE); Hellinger, Raphael, Farmington Hills, MI 48331-3418 (US); Pontes, Juan, 70372 Stuttgart (DE)

(57) **Zusammenfassung**

Die Erfindung betrifft einen Radarsensor (101, 201, 401), umfassend: eine Radarsendeeinrichtung (103) zum Senden von Radarstrahlung, eine Radarlinse (105) zum Brechen der ausgesendeten Radarstrahlung, wobei die Radarsendeeinrichtung (103) mehrere versetzt zueinander angeordnete Radarsender (107, 109, 111, 113) aufweist, wobei die Radarsender (107, 109, 111, 113) jeweils eine gleiche Richtcharakteristik (115) relativ zu einer optischen Achse (117) der Radarlinse (105) aufweisen, eine Steuerung (119) zum Steuern der Radarsendeeinrichtung (103), wobei die Steuerung (119) ausgebildet ist, die Radarsender (107, 109, 111, 113) unabhängig voneinander zu aktivieren oder zu deaktivieren, um die Radarlinse (105) von unterschiedlichen Positionen relativ zu einem Fokus der Radarlinse (105) mittels Radarstrahlung speisen zu können.

Die Erfindung betrifft ferner ein Verfahren zum Betreiben des Radarsensors (101, 201, 401). Die Erfindung betrifft ferner ein entsprechendes Computerprogramm.

## Beschreibung

Die Erfindung betrifft einen Radarsensor sowie ein Verfahren zum Betreiben des Radarsensors. Die Erfindung betrifft ferner ein Computerprogramm.

### Stand der Technik

Aus der Offenlegungsschrift DE 10 2010 064 348 A1 ist ein Radarsensor für Kraftfahrzeuge bekannt. Der bekannte Radarsensor umfasst zwei Gruppen von Antennenelementen, die sich in ihrer Wirkrichtung in Elevation unterscheiden. Das heißt also insbesondere, dass die zwei Gruppen von Antennenelementen jeweils eine unterschiedliche Richtcharakteristik aufweisen. Der bekannte Radarsensor umfasst ferner eine Steuereinrichtung, die ausgebildet ist, die beiden Gruppen im periodischen Wechsel zu aktivieren und zu deaktivieren.

### Offenbarung der Erfindung

Die der Erfindung zugrunde liegende Aufgabe kann darin gesehen werden, einen Radarsensor bereitzustellen.

Die der Erfindung zugrunde liegende Aufgabe kann auch darin gesehen werden, ein Verfahren zum Betreiben eines Radarsensors bereitzustellen.

Die der Erfindung zugrunde liegende Aufgabe kann ferner darin gesehen werden, ein Computerprogramm bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Radarsensor bereitgestellt, umfassend:
- eine Radarsendeeinrichtung zum Senden von Radarstrahlung,
- eine Radarlinse zum Brechen der ausgesendeten Radarstrahlung,
- wobei die Radarsendeeinrichtung mehrere versetzt zueinander angeordnete Radarsender aufweist,
- wobei die Radarsender jeweils eine gleiche Richtcharakteristik relativ zu einer optischen Achse der Radarlinse aufweisen,
- eine Steuerung zum Steuern der Radarsendeeinrichtung,
- wobei die Steuerung ausgebildet ist, die Radarsender unabhängig von einander zu aktivieren oder zu deaktivieren, um die Radarlinse von unterschiedlichen Positionen relativ zu einem Fokus der Radarlinse mittels Radarstrahlung speisen oder beaufschlagen zu können.

Gemäß einem weiteren Aspekt wird ein Verfahren zum Betreiben des Radarsensors bereitgestellt, wobei die Radarsender unabhängig voneinander aktiviert oder deaktiviert werden, um die Radarlinse von unterschiedlichen Positionen relativ zu einem Fokus der Radarlinse zu speisen.

Gemäß einem weiteren Aspekt wird ein Computerprogramm bereitgestellt, das Programmcode zur Ausführung des Verfahrens zum Betreiben des Radarsensors umfasst, wenn das Computerprogramm in einem Computer, vorzugsweise in einer Steuerung, ausgeführt wird.

Durch das Vorsehen der Radarlinse und der Steuerung ist es insbesondere in vorteilhafter Weise ermöglicht, eine Hauptradarleistung der abgestrahlten Radarstrahlung in abweichende Raumrichtungen von einer optischen Linsenachse des Radsensors auszusenden, obwohl die Radarsender, mit denen die Radarlinse gespeist werden eine gleiche Richtcharakteristik relativ zu der optischen Linsenachse der Radarlinse aufweisen. Denn die mittels der Radarsender ausgesendete Radarstrahlung wird unterschiedlich mittels der Radarlinse gebrochen abhängig von einer jeweiligen Position der einzelnen Radarsender relativ zu der Radarlinse. Dieser Effekt wird auch als Squinteffekt bezeichnet werden.

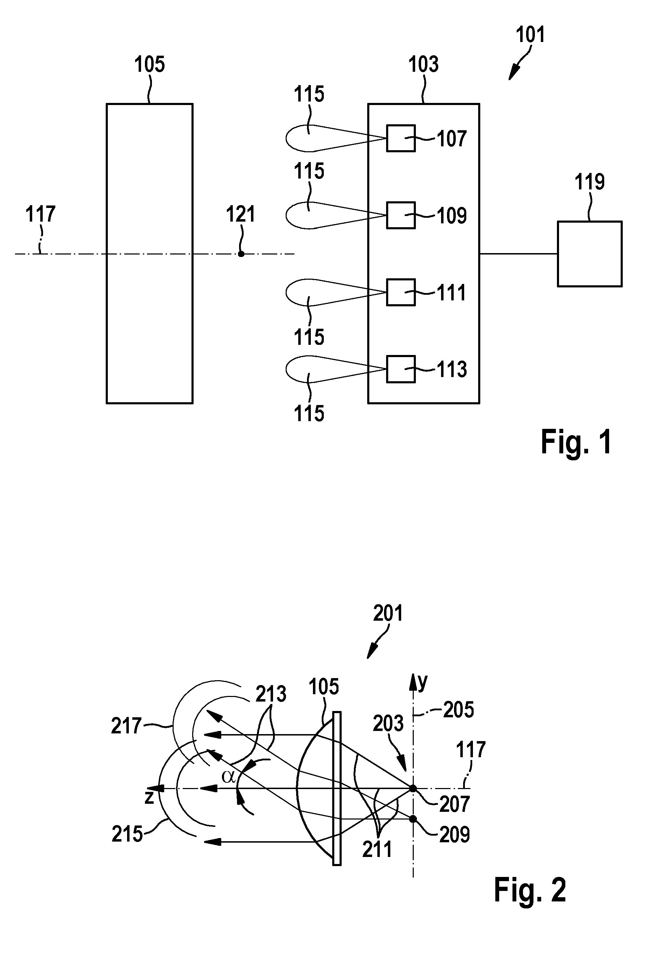

Hierbei kann die Brechung der Radarstrahlung an der Radarlinse wie eine Brechung von Licht an einer Linse beschrieben werden (vgl. auch Fig. 2).

So kann also insbesondere durch gezieltes Aktivieren oder Deaktivieren der einzelnen Radarsender definiert eingestellt werden, wie die Richtcharakteristik der mittels der Radarlinse abgestrahlten Radarstrahlung, die der gebrochenen Radarstrahlung entspricht, aussehen soll. So wird es beispielsweise einen Unterschied in der Ausleuchtung der Umgebung geben zwischen einem Fall, dass sämtliche Radarsender aktiviert sind, und einem anderen Fall, dass nur einige der Radarsender aktiviert sind.

Die Möglichkeit, dass die Hauptstrahlrichtung mittels Schaltung der Radarsender verändert werden kann, ist insbesondere dann von Vorteil, wenn kritische Messsituationen vorliegen sollten. Eine solche kritische Messsituation kann beispielsweise folgende Fahrsituation umfassen: zwei Fahrzeuge, fahren nebeneinander vor dem Radarsensor. Hierbei weisen beide Fahrzeuge eine gleiche Distanz relativ zu dem Radarsensor auf und fahren mit der gleichen Geschwindigkeit. Sofern hier nun sämtliche Radarsender aktiviert wären, würde in dieser kritischen Messsituation in der Regel nur ein Fahrzeug detektiert werden, obwohl tatsächlich zwei Fahrzeuge vor dem Radarsensor sich befinden. Dadurch aber, dass es möglich ist, nicht das gesamte mögliche Sichtfeld des Radarsensors auszuleuchten, kann gezielt nur eines der beiden Fahrzeuge mittels Radarstrahlung beaufschlagt werden und somit auch detektiert werden. Es ist somit insbesondere in vorteilhafter Weise ermöglicht, gezielt den maximal möglich ausleuchtbaren Bereich einzuschränken, um ungewollte Störungen, zu unterdrücken. Dies führt insbesondere in vorteilhafter Weise zu einer besseren Messfähigkeit des gewünschten Objekts, hier beispielsweise der beiden Fahrzeuge.

Ein Sichtfeld des Radarsensors bezeichnet insbesondere den momentan ausgeleuchteten Bereich der Umgebung des Radarsensors, also den mittels Radarstrahlung beaufschlagten Bereich. Das Sichtfeld kann insbesondere auch als Radarsichtfeld bezeichnet werden. Das maximale Sichtfeld bezeichnet insbesondere den maximal möglich ausleuchtbaren Bereich der Umgebung. Wenn das Sichtfeld nicht dem maximalen Sichtfeld entspricht, kann das Sichtfeld auch als Teilsichtfeld des maximal möglich ausleuchtbaren Bereichs bezeichnet werden. Eine Radarlinse im Sinne der vorliegenden Erfindung bezeichnet insbesondere ein Element oder eine Einheit oder eine Einrichtung, welche respektive welches ausgebildet sind, Radarstrahlung zu brechen, insbesondere zu fokussieren oder zu divergieren. Mittels der Formulierung "Radarlinse" soll auch der Fall von mehreren Radarlinsen umfasst sein. Diese mehrere Radarlinsen sind insbesondere gleich oder vorzugsweise unterschiedlich gebildet. Das heißt also insbesondere, dass eine Radarlinse im Sinne der vorliegenden Erfindung auch ein Radarlinsensystem umfassend mehrere Radarlinsen bedeuten kann. Die Radarlinse kann beispielsweise als Sammellinse ausgebildet sein.

Da die gebrochene Radarstrahlung von der Radarlinse selbst abgestrahlt wird, kann die Radarlinse auch als eine Linsenantenne bezeichnet werden.

Die optische Achse oder Linsenachse der Radarlinse bezeichnet insbesondere eine gerade Linie, die beispielsweise mit einer Symmetrieachse der Radarlinse übereinstimmen kann. Sofern ein Radarlinsensystem vorgesehen ist, bezeichnet die optische Achse die Linie, die durch die optische Achse der Einzelelemente, also der einzelnen Radarlinsen, gebildet wird.

Die Richtcharakteristik im Sinne der vorliegenden Erfindung beschreibt insbesondere eine Wnkelabhängigkeit einer Intensität der empfangenen und/oder gesendeten Radarstrahlung relativ zu der optischen Achse. Dass die Radarsender jeweils eine gleiche Richtcharakteristik relativ zu der optischen Achse der Radarlinse aufweisen, bedeutete insbesondere, dass ein Winkel zwischen der optischen Achse und einer Richtung, in welcher die mittels der Radarsender ausgesendete Radarstrahlung maximal ist, jeweils gleich ist. Das heißt also insbesondere, dass eine Hauptrichtung der Radarstrahlung der einzelnen Radarsender jeweils gleich ist.

Ein aktivierter Radarsender sendet oder emittiert Radarstrahlung. Ein deaktivierter Radarsender emittiert oder sendet keine Radarstrahlung.

Ausführungsformen des Verfahrens ergeben sich entsprechend aus den Ausführungsformen des Radarsensors und umgekehrt.

Nach einer Ausführungsform kann vorgesehen sein, dass die Steuerung ausgebildet ist, zwischen mehreren Betriebszuständen der Radarsendeeinrichtung zu schalten, wobei den Betriebszuständen jeweils eine Permutation von aktivierten und deaktivierten Radarsendern zugeordnet ist. Durch das Vorsehen solcher Betriebszustände können in vorteilhafter Weise definiert und einfach verschiedene Bereiche der Umgebung der Radarlinse mittels Radarstrahlung ausgeleuchtet werden. Eine Permutation von aktivierten und deaktivierten Radarsendern bezeichnet insbesondere eine bestimmte Anordnung an aktivierten und/oder deaktivierten Radarsendern. Beispielsweise kann eine solche Permutation eine Anordnung von Radarsendern umfassen, die alle aktiviert sind. Eine solche Permutation kann insbesondere eine Anordnung umfassen, in welcher alle Radarsender deaktiviert sind. Eine Permutation kann insbesondere den Fall umfassen, dass ein Radarsender aktiviert ist und die restlichen Radarsender deaktiviert sind. Eine Permutation kann insbesondere den Fall umfassen, dass ein Radarsender deaktiviert ist und die restlichen Radarsender aktiviert sind.

Nach einer Ausführungsform kann vorgesehen sein, dass die mehreren Radarsender senkrecht zu dem Fokus, der insbesondere allgemein auch als Fokuspunkt bezeichnet werden kann, der Radarlinse angeordnet sind. Das heißt also insbesondere, dass die Radarsender in einer Brennebene der Radarlinse angeordnet sind. Die Brennebene bezeichnet insbesondere die Ebene, die durch den Fokus der Radarlinse verläuft und senkrecht auf der optischen Achse steht.

Nach einer Ausführungsform kann vorgesehen sein, dass nicht alle Radarsender bistatisch angesteuert werden, also über eine Sende/Empfangsteil, sondern teilweise monostatisch, also direkt mit einem Oszillator verbunden sind. Das heißt also insbesondere, dass zumindest ein Radarsender, insbesondere zumindest einige Radarsender, teilweise monostatisch, insbesondere vollständig monostatisch, angesteuert werden. Das heißt also insbesondere, dass diese Radarsender direkt mit einem Oszillator zum Erzeugen eines Radarsignals verbunden sind. Eine bistatische Ansteuerung bedeutet insbesondere, dass ein Radarsender mit einem Sende-/Empfangsteil oder mit einer Sende-/Empfangseinheit verbunden ist.

Nach noch einer Ausführungsform kann vorgesehen sein, dass zumindest einige der Radarsender eine Sendeantenne aufweisen, wobei ein Oszillator zum Erzeugen eines Radarsignals mit den Sendeantennen verbunden ist und wobei die Steuerung ausgebildet ist, das Radarsignal des Oszillators auf jede der Sendeantennen einzeln zu schalten oder zu trennen, um die Radarsender zu aktivieren oder zu deaktivieren. Das heißt also insbesondere, dass die Sendeantenne direkt mit dem Oszillator verbunden ist. Dies kann insbesondere als eine monostatische Ansteuerung bezeichnet werden. Das heißt also insbesondere, dass der Oszillator direkt die einzelnen Sendeantennen mittels des Radarsignals speisen kann. Vorzugsweise kann vorgesehen sein, dass nur einer der Radarsender aufweisend eine Sendeantenne mit dem Oszillator direkt verbunden ist.

Allgemein kann ein Radarsender insbesondere eine Antenne aufweisen, die je nach Wirkung als Sendeantenne, Empfangsantenne oder als Sende/Empfangsantenne bezeichnet werden kann.

Nach noch einer Ausführungsform kann vorgesehen sein, dass zumindest einige der Radarsender bistatisch angesteuert werden. Im bistatischen Fall ist ein Signalmischer mit dem Oszillator und mit den Sende/Empfangsantennen, die Sendeantenne wirkt hier insbesondere auch als Empfangsantenne, verbunden, wobei der Signalmischer ausgebildet ist, ein einer mittels der Empfangsantenne empfangenen Radarstrahlung entsprechendes Empfangssignal mit dem Radarsignal des Oszillators zu mischen. Dies kann insbesondere als eine bistatische Ansteuerung bezeichnet werden.

Das heißt also insbesondere, dass zumindest einige der Radarsender gleichzeitig als Radarempfänger zum Empfangen von Radarstrahlung ausgebildet sind. Durch das Vorsehen des Signalmischers ist es in vorteilhafter Weise ermöglicht, die Empfangssignale mit dem Radarsignal des Oszillators zu mischen, so dass basierend auf diesem Mischvorgang beispielsweise ein Abstand von einem Objekt relativ zu dem Radarsensor und eine Relativgeschwindigkeit zwischen dem Objekt und dem Radarsensor bestimmt werden kann. Beispielsweise kann der Radarsensor gemäß dem Prinzip eines FMCW-Radars betrieben werden, wobei "FMCW" für "frequency modulated continuous wave" steht.

Nach noch einer Ausführungsform kann vorgesehen sein, dass die Steuerung die Radarsender in Abhängigkeit von einem die Umgebung der Radarlinse beschreibenden Umgebungsparameter aktiviert oder deaktiviert.

Das heißt also insbesondere, dass die Umgebung der Radarlinse einen Einfluss darauf hat, welche Bereiche der Umgebung ausgeleuchtet oder mittels Radarstrahlung beaufschlagt werden sollen. So ist es beispielsweise in einer Kurve sinnvoll, nur einen bestimmten Kurvenbereich mittels der Radarstrahlung zu beaufschlagen oder auszuleuchten, um unnötige Reflexionen oder Störungen unterdrücken zu können.

Sofern beispielsweise erfasst wird, beispielsweise mittels einer Videokamera, dass sich vor der Radarlinse mehrere Fahrzeuge befinden, so kann auch hier wieder nur ein Teilsichtfeld des maximal möglichen Sichtfeldes des Radarsensors ausgeleuchtet werden.

Nach einer Ausführungsform kann vorgesehen sein, dass es sich bei dem Radarsensor um einen Radarsensor für ein Fahrzeug, insbesondere ein Kraftfahrzeug, handelt.

Offenbart als eigenständige Ausführungsform ist somit auch ein Fahrzeug umfassend den Radarsensor.

Die Erfindung wird im Folgenden anhand von bevorzugten Ausführungsbeispielen näher erläutert. Hierbei zeigen
- Fig. 1: einen Radarsensor,
- Fig. 2: einen weiteren Radarsensor,
- Fig. 3: ein Ablaufdiagramm eines Verfahrens zum Betreiben eines Radarsensors,
- Fig. 4: einen weiteren Radarsensor und
- Fign. 5 - 10: jeweils einen Betriebszustand des Radarsensors gemäß Fig. 4 sowie ein sich daraus ergebendes Radarsichtfeld.

Im Folgenden können für gleiche Merkmale gleiche Bezugszeichen verwendet werden.

Fig. 1 zeigt einen Radarsensor 101.

Der Radarsensor 101 umfasst eine Radarsendeeinrichtung 103 zum Senden von Radarstrahlung. Des Weiteren umfasst der Radarsensor 101 eine Radarlinse 105. Die Radarlinse 105 ist ausgebildet, die mittels der Radarsendeeinrichtung 103 ausgesendete Radarstrahlung zu brechen.

Bei der Radarlinse 105 kann es sich beispielsweise um eine Sammellinse handeln. Das heißt also insbesondere, dass die Radarlinse 105 die mittels der Radarsendeeinrichtung 103 ausgesendete Radarstrahlung sammeln oder bündeln kann.

Die Radarsendeeinrichtung 103 umfasst vier Radarsender 107, 109, 111 und 113, die versetzt zueinander angeordnet sind.

Die Radarsender 107, 109, 111 und 113 weisen jeweils eine gleiche Richtcharakteristik relativ zu einer optischen Achse 117 der Radarlinse 105 auf. Die Richtcharakteristik der Radarsender 107, 109, 111 und 113 ist schematisch mittels einer Radarkeule mit dem Bezugszeichen 115 gekennzeichnet.

Ferner umfasst der Radarsensor 101 eine Steuerung 119 zum Steuern der Radarsendeeinrichtung 103. Die Steuerung 119 ist ausgebildet, die Radarsender 107, 109, 111 und 113 unabhängig voneinander zu aktivieren oder zu deaktivieren, um die Radarlinse 105 von unterschiedlichen Positionen relativ zu einem Fokus 121 der Radarlinse mittels Radarstrahlung beaufschlagen oder speisen zu können.

Das heißt also insbesondere, dass die Steuerung 119 beispielsweise den Radarsender 107 aktivieren und die Radarsender 109, 111 und 113 deaktivieren kann. Es sind weitere mögliche Permutationen von aktivierten und deaktivierten Radarsendern möglich. Jede einzelne Permutation entspricht dann insbesondere einem Betriebszustand der Radarsendeeinrichtung 103. Die Steuerung 119 ist dann insofern insbesondere ausgebildet, zwischen diesen Betriebszuständen der Radarsendeeinrichtung 103 zu schalten.

Es ist somit in vorteilhafter Weise ermöglicht, ein maximal mögliches Radarsichtfeld in einzelne Teilbereiche aufzuteilen und diese nacheinander durchzuschalten bzw. zu durchleuchten oder abzutasten.

In weiteren nicht gezeigten Ausführungsformen können mehr oder weniger als vier Radarsender vorgesehen sein.

Fig. 2 zeigt einen weiteren Radarsensor 201.

Die Radarlinse 105 des Radarsensors 201 ist als Sammellinse ausgebildet. Ein Fokus oder ein Brennpunkt der Radarlinse 105 ist mittels des Buchstabens "f" gekennzeichnet und ferner mit dem Bezugszeichen 203. In dem Fokus 203 ist ein Radarsender 207 vorgesehen, der der Übersicht halber in Fig. 2 symbolisch als Punkt gezeichnet ist.

Ferner ist ein weiterer Radarsender 209 vorgesehen, der in einer Brennebene 205 der Radarlinse 105 angeordnet ist. Auch dieser Radarsender 209 ist der Übersicht halber in Fig. 2 symbolisch als Punkt gezeichnet.

In weiteren nicht gezeigten Ausführungsformen können mehr oder weniger als zwei Radarsender vorgesehen sein.

Ein Strahlengang der mittels des Radarsenders 207 ausgesendeten Radarstrahlung ist mit Pfeilen mit dem Bezugszeichen 211 gekennzeichnet.

Ein Strahlengang der mittels des Radarsenders 209 ausgesendeten Radarstrahlung ist mittels Pfeilen mit dem Bezugszeichen 213 gekennzeichnet.

Aufgrund der unterschiedlichen Position oder Lage der beiden Radarsender 207 und 209 relativ zu der Radarlinse 105, also insbesondere relativ zu dem Fokus 203, wird die entsprechend ausgesendete Radarstrahlung unterschiedlich durch die Radarlinse 105 gebrochen. Die sich dann daraus ergebenden Wellenfronten der gebrochenen Radarstrahlung sind hier jeweils mit Kreisbögen mit den Bezugszeichen 215 und 217 gekennzeichnet. Hierbei kennzeichnet das Bezugszeichen 215 die Wellenfront der gebrochenen Radarstrahlung des Senders 207. Das Bezugszeichen 217 kennzeichnet die entsprechende Wellenfront des Radarsenders 209.

Die sich dann als Summe ergebene von der Radarlinse 105 emittierte oder ausgesendete Radarstrahlung ergibt sich dann als Überlagerung der beiden Wellenfronten 215 und 217.

Abhängig davon, welcher der beiden Radarsender 207 oder 209 aktiviert oder deaktiviert ist, können somit unterschiedliche Bereiche in der Umgebung der Radarlinse 105 ausgeleuchtet oder abgetastet werden.

Wenn beispielsweise lediglich der Radarsender 207 aktiviert ist und der Radarsender 209 deaktiviert ist, so wird ein Frontbereich der Radarlinse 105 ausgeleuchtet. Wenn noch zusätzlich beispielsweise der Radarsender 209 zu dem Radarsender 207 aktiviert ist, so kann noch ein bezogen auf den Radarsender 207 rechtsliegender Bereich abgetastet werden.

Umgekehrt, wenn nur der Radarsender 209 aktiviert ist und der Radarsender 207 deaktiviert ist, so wird lediglich der rechtsliegende Bereich abgetastet werden können.

Die Steuerung, die die beiden Radarsender 207 und 209 steuert, ist der Übersicht halber in Fig. 2 nicht gezeigt.

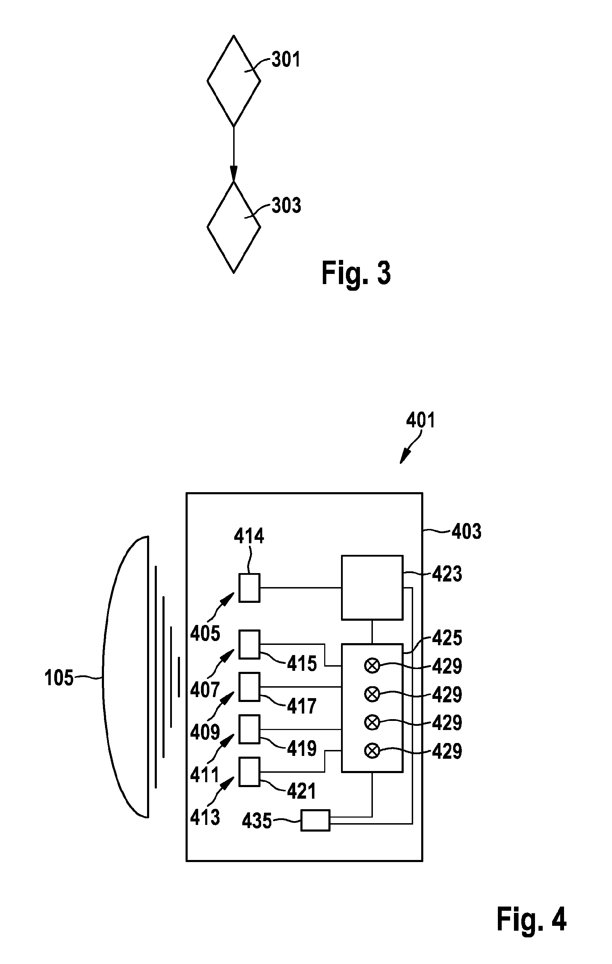

Fig. 3 zeigt ein Ablaufdiagramm eines Verfahrens zum Betreiben eines Radarsensors. Hierbei kann es sich beispielsweise um den Radarsensor 101 gemäß Fig. 1 handeln.

In einem Schritt 301 wird der Radarsender 107 aktiviert. In einem Schritt 303 werden die Radarsender 109, 111 und 113 deaktiviert. Dadurch ist beispielsweise ein ganz anderer Bereich abtastbar oder ausleuchtbar im Vergleich zu dem Fall, in welchem die beiden Radarsender 111 und 109 aktiviert sind und die Radarsender 107 und 113 deaktiviert sind.

Allgemein werden also die Radarsender unabhängig von einander aktiviert oder deaktiviert.

Fig. 4 zeigt einen anderen Radarsensor 401.

Der Radarsensor 401 umfasst einen Träger 403, welcher beispielsweise als eine monolithische mikrowellenintegrierte Schaltung ausgebildet sein kann. Beispielsweise kann der Träger 403 aus Silizium-Germanium (SiGe) gebildet sein.

Der Radarsensor 401 umfasst fünf Radarsender 405, 407, 409, 411 und 413, die nebeneinander in einer Brennebene einer Radarlinse 105 angeordnet sind.

Ferner umfassen die Radarsender 405, 407, 409, 411 und 413 jeweils eine Sendeantenne 414, 415, 417, 419 und 421.

Hierbei sind die Sendeantennen 415, 417, 419 und 421 der Radarsender 407, 409, 411 und 413 gleichzeitig als Empfangsantenne ausgebildet. Das heißt also insbesondere, dass die Radarsender 407, 409, 411 und 413 gleichzeitig als Radarempfänger ausgebildet sind. Die Radarsender 407, 409, 411 und 413 können insbesondere als Sende-/Empfangseinheit bezeichnet werden.

Des Weiteren umfasst der Radarsensor 401 einen Oszillator 423, welcher als Chip auf dem Substrat oder Träger 403 gebildet ist. Der Oszillator stellt ein Radarsignal bereit. Beispielsweise kann das Radarsignal eine Frequenz von 77 GHz aufweisen.

Der Oszillator 423 ist direkt und unmittelbar mit der Sendeantenne 414 des Radarsenders 405 verbunden oder gekoppelt. Das heißt also insbesondere, dass der Oszillator 423 sein Radarsignal direkt in die Sendeantenne 414 des Radarsenders 405 einspeisen kann. Dies kann insbesondere als eine monostatische Ansteuerung des Radarsenders 405 bezeichnet werden.

Des Weiteren ist ein Signalmischer 425 vorgesehen, der mit dem Oszillator 423 verbunden ist, so dass der Signalmischer 425 auch das Radarsignal des Oszillators 423 empfangen kann.

Ferner ist der Signalmischer 425 jeweils mit den Sende-/Empfangsantennen 415, 417, 419 und 421 der Radarsender 407, 409, 411 und 413 verbunden, um das einer empfangenen Radarstrahlung entsprechende Empfangssignal der Radarsender 407, 409, 411, 413 zu erhalten.

Der Signalmischer 425 ist insbesondere ausgebildet, das Radarsignal des Oszillators 423 mit den entsprechenden Empfangssignalen zu mischen oder zu überlagern. Dieser Misch- oder Überlagerungsvorgang ist hier symbolisch mit einem Kreis, in welchem ein Kreuz eingezeichnet ist, mit dem Bezugszeichen 429 gekennzeichnet. Dies kann insbesondere als eine bistatische Ansteuerung der Radarsender 407, 409, 411 und 413 bezeichnet werden.

Des Weiteren ist eine Steuerung 435 vorgesehen, die mit dem Oszillator 423 und mit dem Signalmischer 425 verbunden ist, um die entsprechenden Radarsignale getrennt und unabhängig voneinander in die einzelnen Sendeantennen 414, 415, 417, 419 und 421 einzuspeisen.

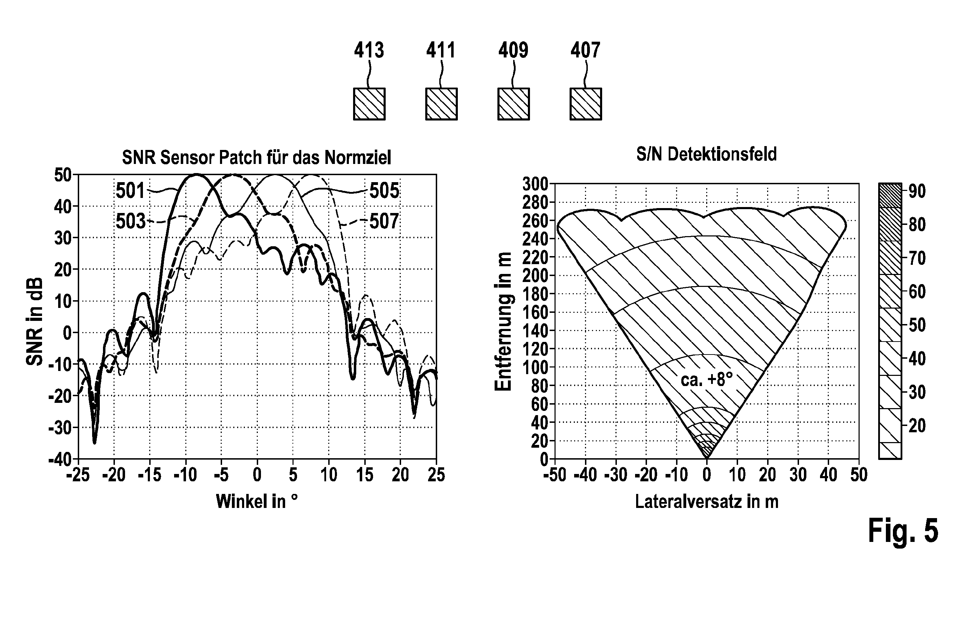

Die Fign. 5 bis 10 zeigen jeweils einen Betriebszustand des Radarsensors 401.

Schematisch in den einzelnen Figuren sind die vier Radarsender 407, 409, 411 und 413 eingezeichnet.

Ferner ist rechts unter den vier Radarsendern 407, 409, 411 und 413 ein Graph für ein Radarsichtfeld, auch S/N (englisch für "Signal-to-noise", auf deutsch "Signal-zu-Rausch") -Detektionsfeld genannt, also das Signal-zu-Rausch-Signal innerhalb des maximal möglichen Detektionsfelds eingezeichnet, das dem ausgeleuchteten Bereich durch die vier Radarsender 407, 409, 411 und 413 entspricht. Hierbei ist eine Entfernung von der Radarlinse 105 über einen Lateralversatz in Metern aufgetragen. 0 m Lateralversatz entspricht der optischen Achse der Radarlinse 105. Die Skale rechts neben dem Graphen kennzeichnet eine Detektionsleistung.

Der linke Graph zeigt die einzelnen Empfangssignale der Radarsender 407, 409, 411 und 413. Aufgetragen ist ein SNR (englisch für "Signal-to-Noise-Ratio", auf deutsch "Signal-zu-Rausch-Verhältnis")-Signal über einen Winkel relativ zu der optischen Achse. 0 ° Grad entspricht also der optischen Achse.

Hierbei kennzeichnet das Bezugszeichen 501 die Kurve des Empfangssignals des Radarsenders 413. Die Kurve mit dem Bezugszeichen 503 entspricht das Empfangssignal des Radarsenders 411. Das Bezugszeichen 505 kennzeichnet die Kurve des Empfangssignals des Radarsenders 409. Das Bezugszeichen 507 kennzeichnet die Kurve des Empfangssignals des Radarsenders 407.

In Fig. 5 sind alle vier Radarsender 407, 409, 411 und 413 aktiviert, so dass alle vier Sendeantennen 415, 417, 419 und 421 Radarstrahlung aussenden.

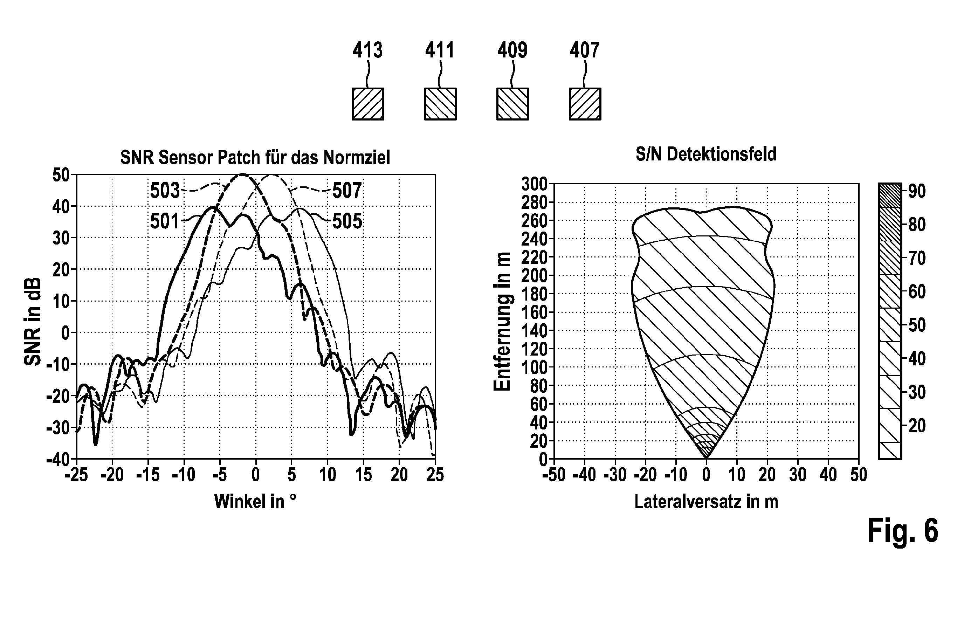

In Fig. 6 sind lediglich die beiden mittleren Radarsender 409 und 411 aktiviert, die beiden äußeren Radarsender 407 und 413 sind deaktiviert. Entsprechend eingeschränkt ist das abgetastete oder ausgeleuchtete Radarsichtfeld.

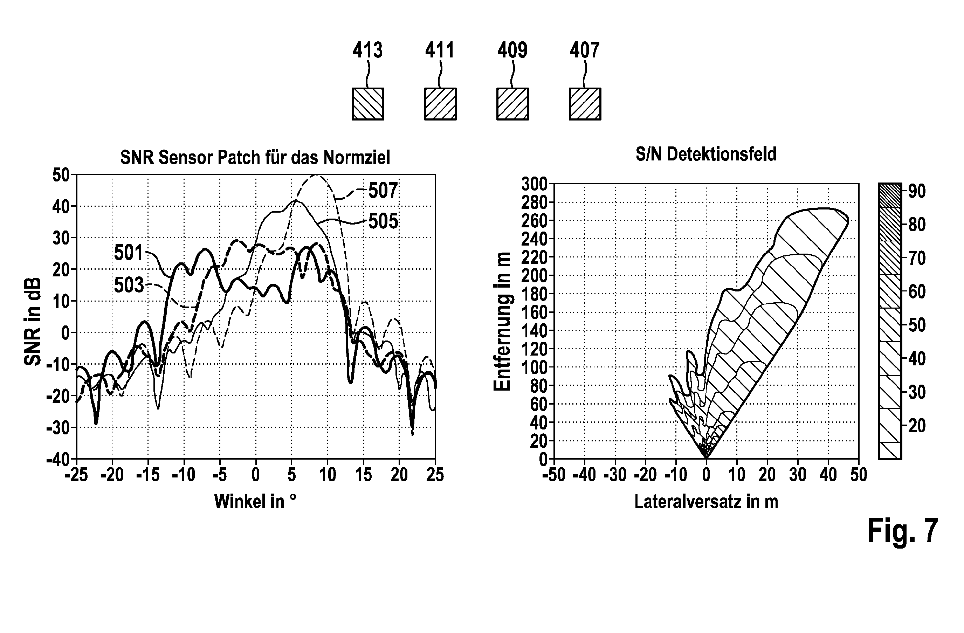

In Fig. 7 ist nur der Radarsender 413 aktiviert. Die drei Radarsender 411, 409 und 407 sind deaktiviert. Entsprechend zeigt das Radarsichtfeld mehr nach außen. Ein zentraler Bereich wird nur eingeschränkt abgetastet.

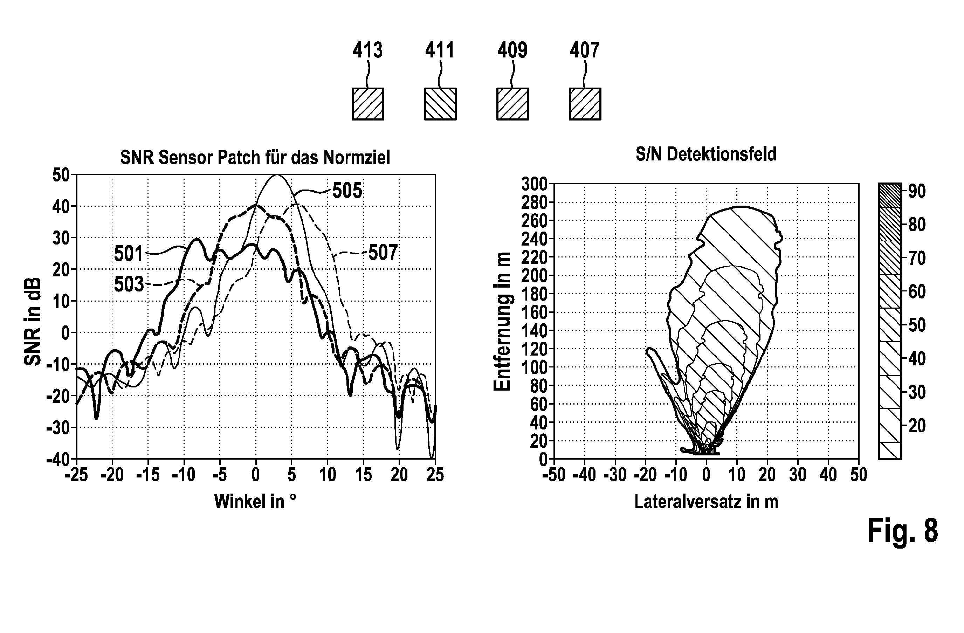

In Fig. 8 ist nur der Radarsender 411 aktiviert. Die Radarsender 407, 409 und 413 sind deaktiviert.

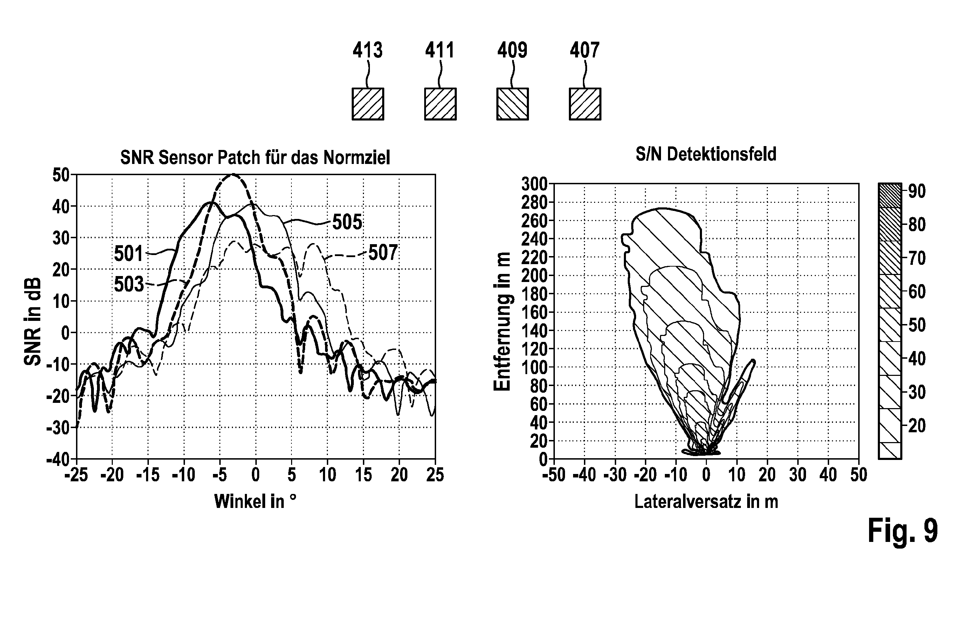

In Fig. 9 ist lediglich der Radarsender 409 aktiviert. Die Radarsender 407, 411, 413 sind deaktiviert.

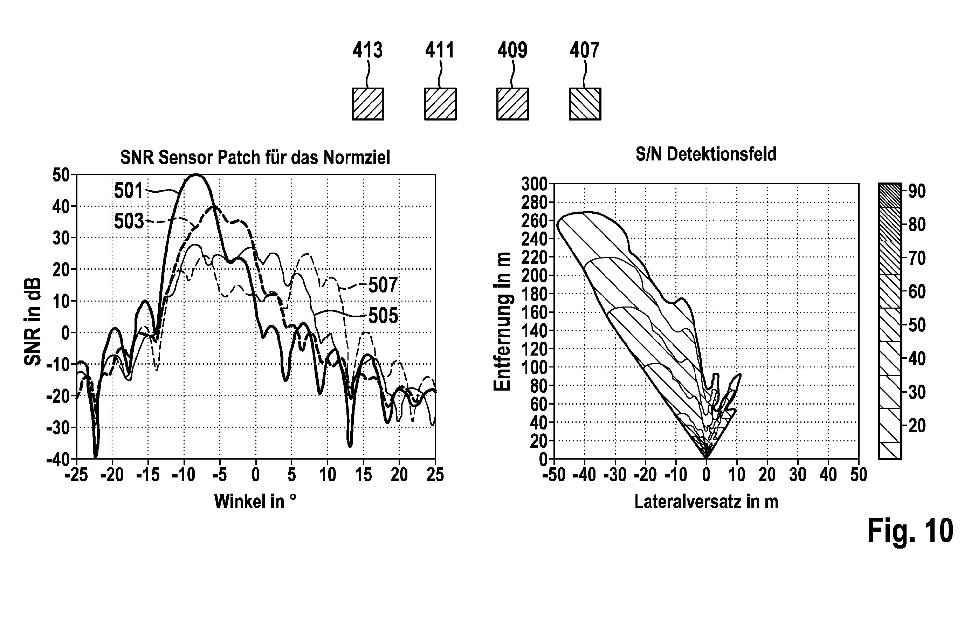

In Fig. 10 ist lediglich der Radarsender 407 aktiviert. Die drei Radarsender 409, 411 und 413 sind deaktiviert.

Die Steuerung schaltet zwischen diesen verschiedenen Permutationen durch, so dass nur bestimmte Bereiche der Umgebung des Radarsensors ausgeleuchtet werden.

Befinden sich zum Beispiel zwei Fahrzeuge in der gleichen Entfernungs- und Geschwindigkeitszelle bei +2.5° bzw. -2.5°, so kann durch den Schaltzustand in Fig. 8 das Fahrzeug in +2.5 ° ungestört und damit im Winkel korrekt und durch den Schaltzustand in Fig. 9 das Fahrzeug bei -2.5° ungestört und damit im Winkel korrekt detektiert werden, da die Detektionsleistung des jeweils anderen Fahrzeugs stark gedämpft ist.

Im Schaltzustand gemäß Fig. 5 ist eine zuverlässige Unterscheidung der beiden Fahrzeuge hingegen erheblich erschwert, da hier beide Fahrzeuge gleichzeitig mittels Radarstrahlung beaufschlagt werden. Dies erschwert eine Detektion dahingehend, dass in der Auswertung der Detektionssignale beide Fahrzeuge von einander unterschieden werden können, erheblich.

Zusammenfassend umfasst also die Erfindung insbesondere den Gedanken, Radarsender gezielt und unabhängig voneinander zu aktivieren oder zu deaktivieren, um so die Radarlinse von unterschiedlichen Positionen relativ zu einem Fokus oder Fokuspunkt der Radarlinse mittels Radarstrahlung speisen oder beaufschlagen zu können. Dadurch können insbesondere in vorteilhafter Weise unterschiedliche Bereiche einer Umgebung des Radarsensors getrennt von einander abgetastet oder ausgeleuchtet werden.

Es wird also in der Regel bei zumindest einem deaktivierten Radarsender nur ein eingeschränkter Bereich bezogen auf einen maximal möglichen Abtastbereich abgetastet. Hierdurch können in vorteilhafter Weise mögliche Störungen unterdrückt werden, was in vorteilhafter Weise eine bessere Messfähigkeit von Objekten im Umfeld des Radarsensensors bewirkt.

## Patentansprüche

1. Radarsensor (101, 201, 401), umfassend:
- eine Radarsendeeinrichtung (103) zum Senden von Radarstrahlung,
- eine Radarlinse (105) zum Brechen der ausgesendeten Radarstrahlung,
- wobei die Radarsendeeinrichtung (103) mehrere versetzt zueinander angeordnete Radarsender (107, 109, 111, 113) aufweist,
- wobei die Radarsender (107, 109, 111, 113) jeweils eine gleiche Richtcharakteristik (115) relativ zu einer optischen Achse (117) der Radarlinse (105) aufweisen,
- eine Steuerung (119) zum Steuern der Radarsendeeinrichtung (103),
- wobei die Steuerung (119) ausgebildet ist, die Radarsender (107, 109, 111, 113) unabhängig von einander zu aktivieren oder zu deaktivieren, um die Radarlinse (105) von unterschiedlichen Positionen relativ zu einem Fokus (121) der Radarlinse (105) mittels Radarstrahlung speisen zu können.

2. Radarsensor (101, 201, 401) nach Anspruch 1, wobei die Steuerung (119) ausgebildet ist, zwischen mehreren Betriebszuständen der Radarsendeeinrichtung (103) zu schalten, wobei den Betriebszuständen jeweils eine Permutation von aktivierten und deaktivierten Radarsendern (107, 109, 111, 113) zugeordnet ist.

3. Radarsensor (101, 201, 401) nach Anspruch 1 oder 2, wobei die mehreren Radarsender (107, 109, 111, 113) senkrecht zu einem Fokus (203) der Radarlinse (105) angeordnet sind.

4. Radarsensor (101, 201, 401) nach einem der vorherigen Ansprüche, wobei zumindest einige der Radarsender (107, 109, 111, 113) eine Sendeantenne (414, 415, 417, 419, 421) aufweisen, wobei ein Oszillator (423) zum Erzeugen eines Radarsignals mit den Sendeantennen (414, 415, 417, 419, 421) verbunden ist und wobei die Steuerung (119) ausgebildet ist, das Radarsignal des Oszillators (423) auf jede der Sendeantennen (414, 415, 417, 419, 421) einzeln zu schalten oder zu trennen, um die Radarsender (107, 109, 111, 113) zu aktivieren oder zu deaktivieren.

5. Radarsensor (101, 201, 401) nach Anspruch 4, wobei zumindest einige der Sendeantennen (414, 415, 417, 419, 421) als Empfangsantenne (415, 417, 419, 421) für Radarstrahlung ausgebildet sind, wobei ein Signalmischer (425) mit dem Oszillator (423) und mit den Empfangsantennen (415, 417, 419, 421) verbunden ist, wobei der Signalmischer (425) ausgebildet ist, ein einer mittels der Empfangsantenne (415, 417, 419, 421) empfangenen Radarstrahlung entsprechendes Empfangssignal mit dem Radarsignal des Oszillators (423) zu mischen.

6. Radarsensor (101, 201, 401) nach einem der vorherigen Ansprüche, wobei die Steuerung (119) die Radarsender (107, 109, 111, 113) in Abhängigkeit von einem die Umgebung der Radarlinse (105) beschreibenden Umgebungsparameter aktiviert oder deaktiviert.

7. Verfahren zum Betreiben eines Radarsensors (101, 201, 401) nach einem der vorherigen Ansprüche, wobei die Radarsender (107, 109, 111, 113) unabhängig von einander aktiviert (301) oder deaktiviert (303) werden, um die Radarlinse (105) von unterschiedlichen Positionen relativ zu einem Fokus (121) der Radarlinse (105) mittels Radarstrahlung zu speisen.

8. Computerprogramm, umfassend Programmcode zur Ausführung des Verfahrens nach Anspruch 7, wenn das Computerprogramm in einem Computer ausgeführt wird.
